# EUROPÄISCHE PATENTANMELDUNG

(11) **EP 1 195 595 A1**
(43) Veröffentlichungstag der Anmeldung: **10.04.2002**
(21) Anmeldenummer: 01123306.1
(22) Anmeldetag: 08.10.2001
(51) Int. Cl.: G01N 3/08

(54) **Temperiervorrichtung, insbesondere für eine Werkstoffprüfvorrichtung sowie Werkstoffprüfverfahren**

(30) Priorität: 09.10.2000 DE 10049833
(71) Anmelder: IFF Prof.Dr. Habenicht, Institut für fügetechnische Fertigungsverfahren GmbH, 85748 Garching (DE)
(72) Erfinder: Lammel, Christian, Dr., 85737 Ismaning (DE)

(57) **Zusammenfassung**

Temperiervorrichtung, insbesondere für eine Werkstoffprüfvorrichtung zur Temperierung eines Probenkörpers (1) aufweisend zumindest eine auf eine vorbestimmbare Temperatur regelbare Temperiereinheit (50, 51), welche lediglich im Bereich einer Prüfzone (4, 5) des Probenkörpers (1) diese berührend oder unmittelbar benachbart zur Prüfzone (4, 5) auf die Prüfzone (4, 5) einwirkend angeordnet ist.

## Beschreibung

Die Erfindung betrifft eine Temperiervorrichtung, insbesondere für eine Werkstoffprüfvorrichtung sowie ein Werkstoffprüfverfahren, insbesondere unter Verwendung der Temperiervorrichtung.

Zur Ermittlung der Werkstoffeigenschaften von beispielsweise Strukturverklebungen zwischen Metallteilen mittels eines Polymerklebstoffs, werden verschiedene Prüfverfahren durchgeführt. Hierzu zählen beispielsweise die quasistatische Bestimmung der Zugscherfestigkeit hochfester Überlappungsklebungen gemäß der DIN EN 1465 oder ein Verfahren zur Prüfung der Ermüdungseigenschaften von Strukturklebungen bei Zugscherbeanspruchung gemäß der DIN EN ISO 9664, hochdynamische Prüfverfahren zur Ermittlung der mechanischen Eigenschaften von Klebverbindungen unter Schlagzug- oder Schlagdruckbeanspruchung sowie dynamische Prüfverfahren zur Ermittlung der Langzeiteigenschaften von Klebstoffen, wie zum Beispiel Zeitstandfestigkeitsversuche oder Dauerfestigkeitsversuche. Diese Werkstoffprüfverfahren lassen sich im wesentlichen in Kurzzeit- und Langzeitversuche unterteilen, wobei quasistatische Zugscher- bzw. Druckscherversuche und hochdynamische Werkstoffprüfverfahren, d. h. Werkstoffprüfverfahren mit schlagartiger Beanspruchung den Kurzzeitversuchen zuzuordnen sind und Werkstoffprüfverfahren z. B. zur Ermittlung der Zeitstandfestigkeit bzw. der Dauerfestigkeit und Prüfverfahren zur Ermittlung des Kriechverhaltens von Klebstoffen Langzeitversuche darstellen. Aufgrund der Temperaturabhängigkeit der Werkstoffeigenschaften, insbesondere der mechanischen Werkstoffeigenschaften von Polymerwerkstoffen wie zum Beispiel Klebstoffen ist es notwendig, die oben genannten Werkstoffprüfungen bei unterschiedlichen Prüftemperaturen eines Probenkörpers durchzuführen.

Beispielsweise wird seitens der Automobilindustrie verlangt, daß sich die Werkstoffeigenschaften, zum Beispiel die Bruchfestigkeit des Klebstoffs in einem Temperaturbereich von -40° bis +120°C nicht wesentlich ändert. Deshalb ist es unumgänglich, die oben genannten Werkstoffprüfungen für unterschiedliche Temperaturen durchzuführen.

Üblicherweise werden zur Durchführung mechanischer Werkstoffprüfverfahren Probenkörper, welche vorzugsweise genormt sind, verwendet.

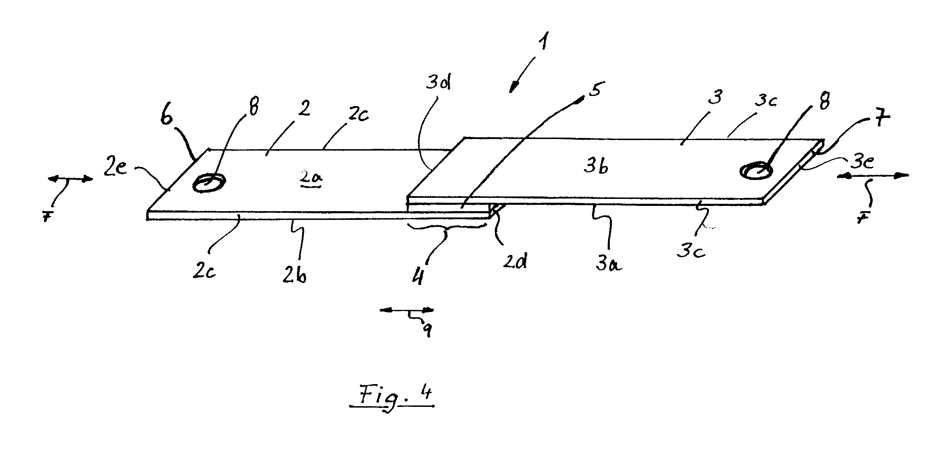

Ein solcher Probenkörper 1 (Figur 4) weist eine erste Probenkörperplatte 2 und eine zweite Probenkörperplatte 3 auf. Die Probenkörperplatten 2, 3 besitzen eine rechteckplattenförmige Raumform mit jeweils einer ersten Flachseite 2a, 3a, einer zweiten Flachseite 2b, 3b, jeweils zwei Längsseitenkanten 2c, 3c sowie jeweils eine erste Schmalseitenkante 2d, 3d und eine zweite Schmalseitenkante 2e, 3e. Die Probenkörperplatten 2, 3 sind bezüglich deren Längserstreckung teilweise überlappend angeordnet, so daß eine Überlappungszone 4 ausgebildet ist, wobei jeweils die Längsseitenkanten 2c, 3c in einer Draufsicht auf die Flachseiten 2a, 3a bzw. 2b, 3b miteinander fluchten. Im Bereich der Überlappungszone 4 ist zwischen den Probenkörperplatten 2, 3 eine Klebstoffschicht 5 angeordnet, welche aus dem zu prüfenden Werkstoff ausgebildet ist. Die Probenkörperplatten 2, 3 und die Klebstoffschicht 5 bilden somit den eine Prüfzone 4, 5 aufweisenden Probenkörper 1, welcher ein erstes freies Ende 6 und ein zweites freies Ende 7 aufweist. Die freien Enden 6, 7 dienen als Einspannenden des Probenkörpers 1 in eine Werkstoffprüfvorrichtung und weisen zur Verbindung mit Einspanneinrichtungen (nicht gezeigt) einer Werkstoffprüfvorrichtung beispielsweise Löcher 8 zur formschlüssigen Aufnahme mittels eines Querbolzens (nicht gezeigt) auf.

Die geometrischen Abmessungen der Probenkörperplatten 2, 3 (Länge, Breite, Dicke) sowie das Überlappungsmaß sind normgemäß, beispielsweise gemäß der DIN EN 1465 oder der DIN EN ISO 9664 ausgebildet. Der Probenkörper 1 gemäß Figur 4 ist als einschnittig überlappender Probenkörper 1 ausgebildet. Normgemäß kann der Probenkörper 1 je nach durchzuführendem Prüfversuch auch als zwei- oder mehrschnittig überlappender Probenkörper 1 ausgebildet sein. Durch Aufbringen von Kräften F in Längsrichtung 9 des Probenkörpers 1 mittels einer Werkstoffprüfvorrichtung (nicht gezeigt) kann die zu prüfende Klebstoffschicht 5 beispielsweise einer Zugscher- oder einer Druckscherbeanspruchung oder dgl. ausgesetzt werden.

Zur Ermittlung des Temperatureinflusses auf die Eigenschaften der zu prüfenden Klebstoffschicht 5 ist es bekannt, beispielsweise bei Kurzzeitversuchen, wie quasistatischen Zug- oder Druckscherversuchen oder hochdynamischen Zugschlag- oder Druckschlagversuchen, die Probenkörper 1 separat in einer Klimakammer vorzutemperieren, wobei der Probenkörper 1 im Falle einer Soll-Prüftemperatur über Raumtemperatur auf eine Ausgangstemperatur über der Soll-Prüftemperatur überhitzt und im Falle einer Soll-Prüftemperatur unter Raumtemperatur auf eine Ausgangstemperatur unter der Soll-Prüftemperatur unterkühlt wird. Nach Erreichen der jeweiligen Ausgangstemperatur wird der Probenkörper 1 aus der Klimakammer entnommen und mit seinen freien Enden 6, 7 in die Einspanneinrichtungen der Werkstoffprüfvorrichtung eingespannt. Im Falle einer vorangegangenen Überhitzung kühlt der Probenkörper 1 währenddessen ab, wohingegen im Falle einer vorangegangenen Unterkühlung der Probenkörper 1 aufgrund der Umgebungswärme erwärmt wird. Nach Ablauf einer gewissen Zeitspanne hat der Probenkörper 1 und somit die zu prüfende Klebstoffschicht 5 ihre Soll-Prüftemperatur erreicht, so daß der Prüfvorgang durchgeführt werden kann.

Ein derartiges Prüfverfahren ist in der Durchführung umständlich und zeitaufwendig. Außerdem ist es notwendig, für jede Soll-Prüftemperatur in Vorversuchen die Zeitspanne zwischen der Entnahme des Probenkörpers 1 aus der Klimakammer und dem Beginn der Versuchsdurchführung zu ermitteln. Dies ist mit unerwünschten Ungenauigkeiten behaftet, da diese Zeitspanne unter anderem von der Umgebungstemperatur abhängig ist. Dies beeinflußt die Reproduzierbarkeit der Versuche nachteilig.

Weiterhin ist es bekannt, zur Durchführung von Langzeitversuchen, wie zum Beispiel Zeitstandfestigkeitsversuchen und Dauerfestigkeitsversuchen, um den eingespannten Probenkörper 1 und die Einspanneinrichtungen der Werkstoffprüfvorrichtung eine Klimakammer anzuordnen, welche sicherstellt, daß während der gesamten Versuchsdauer der Probenkörper 1 die Soll-Prüftemperatur aufweist. Dies erfordert einen hohen apparativen Aufwand, weil ein relativ großes Volumen und neben dem Probenkörper 1 auch zumindest Teile der Einspannvorrichtungen der Werkstoffprüfvorrichtung auf Soll-Prüftemperatur gebracht und auf dieser gehalten werden müssen. Weiterhin sind Einspanneinrichtungen, welche einem weiten Temperaturspektrum ausgesetzt sind, aufwendig und teuer. Außerdem erfordert eine derartige Temperierung einen relativ hohen Energieaufwand. Zudem ist es nicht oder nur unzureichend möglich, den Probenkörper während des Versuches einem definierten Temperaturverlauf auszusetzen, weil derartige Klimakammern sich nur träge auf eine veränderte Temperatur einstellen lassen.

Aufgabe der Erfindung ist es, die Nachteile des Standes der Technik zu vermeiden und insbesondere ein Verfahren zur Werkstoffprüfung anzugeben, welches einfach und schnell durchführbar ist, sowie Ergebnisse liefert, welche einen hohen Grad an Reproduzierbarkeit und eine hohe Genauigkeit aufweisen. Weiterhin soll eine Temperiervorrichtung angegeben werden, welche einfach und kostengünstig aufgebaut ist und zudem einen niedrigen Energieaufwand erfordert. Insbesondere soll die Temperiervorrichtung in einen automatisierten Versuchsablauf einbindbar sein, so daß manuelle Rüst- bzw. Einbauarbeiten während des Versuchs entfallen.

Diese Aufgaben werden mit einer Temperiervorrichtung mit den Merkmalen des Anspruchs 1 und einem Werkstoffprüfverfahren mit den Merkmalen des Anspruchs 26 gelöst.

Eine erfindungsgemäße Temperiervorrichtung weist zumindest eine Temperiereinheit auf, welche den Probenkörper im Bereich einer Prüfzone des Probenkörpers, z. B. einer Überlappungszone, diese berührend oder unmittelbar benachbart zur Prüfzone angeordnet ist, so daß der Probenkörper in einem in die Werkstoffprüfvorrichtung eingesetzten Zustand unmittelbar vor bzw. während der Versuchsdurchführung auf Soll-Prüftemperatur temperierbar ist.

Gemäß einer bevorzugten Ausführungsform ist die Temperiereinheit, vorzugsweise für Kurzzeitversuche, unmittelbar vor der Versuchsdurchführung von der Prüfzone wegbewegbar ausgebildet.

Gemäß einer weiteren Ausführungsform ist die Temperiereinheit von der Prüfzone gering beabstandet unmittelbar benachbart zur Prüfzone nach Art einer lediglich den Bereich der Prüfzone umgebenden Miniaturklimakammer angeordnet, welche, insbesondere für Langzeitversuche, mittels eines Wärmedämmstoffs umgeben ist.

Eine weitere vorteilhafte Ausführungsform der erfindungsgemäßen Temperiervorrichtung weist einen Temperatursensor auf, welcher, z. B. an der Prüfzone anliegend oder in diese eingebettet, ein Steuersignal liefert, anhand dessen die Isttemperatur des zu prüfenden Werkstoffs in der Prüfzone ermittelbar ist.

Beim erfindungsgemäßen Werkstoffprüfverfahren wird die erfindungsgemäße Temperiervorrichtung verwendet, wobei die Temperierung eines Prüfkörpers lediglich im Bereich seiner Prüfzone diese berührend oder unmittelbar benachbart zu dieser erfolgt, und wobei die Temperierung der Prüfzone zeitlich bis unmittelbar vor Versuchsbeginn oder während des gesamten Versuches erfolgt.

Weitere vorteilhafte Ausgestaltungen sind in den Unteransprüchen angegeben.

Im folgenden wird die Erfindung anhand der Zeichnung beispielhaft näher erläutert. Es zeigen:
- Figur 1: schematisch eine erste Ausführungsform der erfindungsgemäßen Temperiervorrichtung in einer den Probenkörper berührenden Stellung mit dem Probenkörper in einer Querschnittsansicht durch eine zu prüfende Klebstoffschicht (Prüfzone);
- Figur 2: schematisch die Temperiervorrichtung gemäß Figur 1 in einer den Probenkörper nicht berührenden Versuchsdurchführungsstellung mit dem Probenkörper in einer Querschnittsansicht durch eine zu prüfende Klebstoffschicht (Prüfzone);
- Figur 3: eine zweite Ausführungsform der erfindungsgemäßen Temperiervorrichtung;
- Figur 4: einen Probenkörper zur Durchführung mechanischer Werkstoffprüfverfahren.

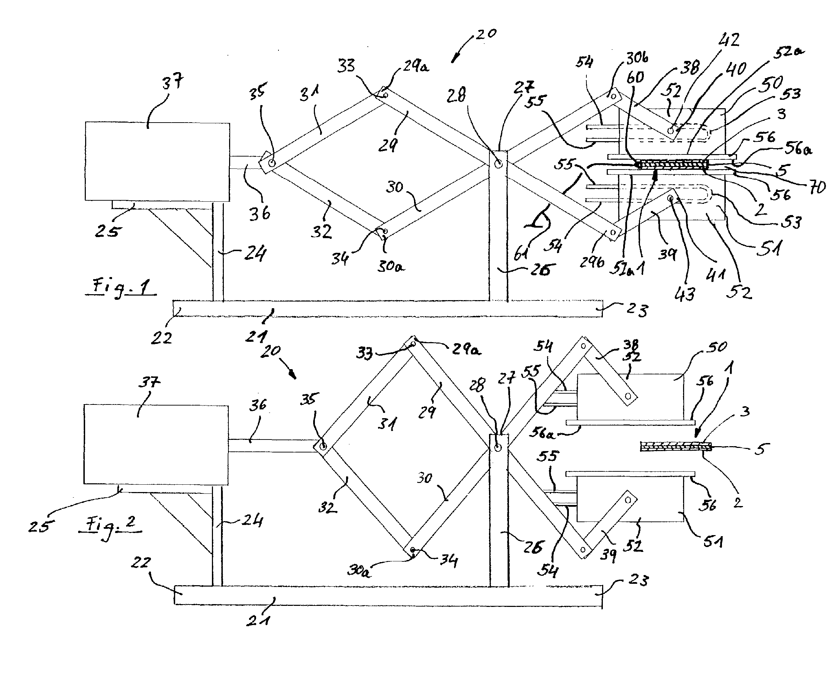

Eine erfindungsgemäße Temperiervorrichtung 20 gemäß einer ersten Ausführungsform (Figur 1, 2) weist eine Grundplatte 21 mit einem ersten Ende 22 und einem zweiten Ende 23 auf. Mittels der Grundplatte 21 ist die Temperiervorrichtung 20 beispielsweise mit einem Maschinenrahmen (nicht gezeigt) einer Werkstoffprüfvorrichtung verbunden.
Auf der Grundplatte 21 ist im Bereich des ersten Endes 22 eine Aufnahmekonsole 24 mit einer Lagerplatte 25 angeordnet. Im Bereich des zweiten Endes 23 erstreckt sich von der Grundplatte 21 weg in die gleiche Richtung wie die Aufnahmekonsole 24 ein Lagerbock 26. Am freien Ende 27 des Lagerbocks 26 lagern um eine gemeinsame Achse 28 schwenkbar gelagert ein erster Scherenhebel 29 und ein zweiter Scherenhebel 30, wobei die Scherenhebel 29, 30 etwa in ihrer Längsmitte um die Achse 28 drehbar gelagert sind. Die Scherenhebel 29, 30 weisen jeweils ein erstes freies Ende 29a, 30a auf, welches in Richtung zur Konsole 24 weist. Mit den ersten freien Enden 29a, 30a des ersten Scherenhebels 29 und des zweiten Scherenhebels 30 sind jeweils Betätigungsstangen 31, 32 um Achsen 33 schwenkbar verbunden. Die freien Enden der Betätigungshebel 31, 32 sind miteinander um eine Achse 35 schwenkbar verbunden und stehen mit einer Schubstange 36 einer Linearantriebseinheit 37 in Verbindung. Die Linearantriebseinheit 37 ist auf der Auflagerplatte 25 der Aufnahmekonsole 24 befestigt und beispielsweise als doppelt wirkende Druckluft-Kolbenzylindereinheit ausgebildet.

An den den Enden 29a, 30a gegenüberliegenden Enden 29b, 30b des ersten Scherenhebels 29 bzw. des zweiten Scherenhebels 30 ist ggf. jeweils ein Hilfslenker 38, 39 gelenkig angeordnet. Am freien Ende 40 des Hilfslenkers 38 sitzt um eine Achse 42 schwenkbar gelagert eine erste Temperiereinheit 50. Am freien Ende 41 des Hilfslenkers 39 sitzt um eine Achse 43 schwenkbar gelagert eine zweite Temperiereinheit 51. Die Temperiereinheiten 50, 51 sind beabstandet gegenüberliegend angeordnet, so daß zwischen ihnen ein Zwischenraum 70 gebildet ist, in dem der Probenkörper 1 angeordnet ist.

Die Temperiereinheiten 50, 51 weisen jeweils einen Temperierblock 52 auf, wobei jeweils ein Temperierblock 52 mit den freien Enden 40 bzw. 41 der Hilfslenker 38 bzw. 39 gelenkig verbunden ist. Die Temperierblöcke 52 weisen im wesentlichen eine quaderförmige Raumform auf und bestehen vorzugsweise aus einem gut wärmeleitenden Werkstoff, insbesondere Aluminium. Im Inneren der Temperierblöcke 52 befindet sich ein fluiddurchströmbarer Kanal 53, welcher mit einem außenseitig am Temperierblock 52 angeordneten Zulaufstutzen 54 und einem Rücklaufstutzen 55 in Verbindung steht. An die Stutzen 54, 55 sind beispielsweise Schläuche (nicht gezeigt) anschließbar, welche mit einer Temperierfluidversorgungseinrichtung (nicht gezeigt) verbunden sind. Die Temperierfluidversorgungseinrichtung weist beispielsweise eine Umwälzpumpe und eine Kühl- bzw. Heizvorrichtung für ein Temperierfluid auf, so daß das Temperierfluid mit einer vorbestimmbaren Temperatur und vorzugsweise mit einer vorbestimmbaren Durchflußmenge durch die Kanäle 53 der Temperierblöcke 52 pumpbar ist. Als Temperierfluid hat sich insbesondere Silikonöl bewährt, wobei je nach gewünschter Temperatur auch andere Fluide, z. B. auch Wasser oder andere Temperierfluide geeignet sind.

Die Temperierblöcke 52 weisen jeweils eine dem Probenkörper 1 zugewandte Flachseite 52a auf. An der Flachseite 52a flächig, insbesondere vollflächig anliegend ist an jedem Temperierblock 52 eine Wärmeübertragungsplatte 56 angeordnet, welche vorzugsweise aus einem gut wärmeleitenden Material besteht. In einer Temperierstellung (Figur 1) der erfindungsgemäßen Temperiervorrichtung 20 liegen die freien Flachseiten 56a der Wärmeübertragungsplatten 56 im Bereich der Überlappungszone 4, d. h. im Bereich der Prüfzone 4, 5 des Probenkörpers 1 auf den zweiten Flachseiten 2b, 3b der ersten Probenkörperplatte 2 bzw. der zweiten Probenkörperplatte 3 berührend an, so daß im Falle einer Erwärmung der Klebstoffschicht 5 ein Wärmestrom vom Temperiermedium über die Temperierblöcke 52, die Wärmeübertragungsplatte 56, die Probenkörperplatten 2 bzw. 3 hin zur zu prüfenden Klebstoffschicht 5 erfolgen kann. Die Wärmeübertragungsplatte 56 ist hinsichtlich ihrer freien Flachseite 56a so bemessen, daß diese flächenmäßig etwa das 1,5- bis 15-fache, bevorzugt das 4- bis 8-fache der Überlappungszone 4 aufweist, wobei die Temperiereinheiten 50, 51 derart bezüglich des Probenkörpers 1 angeordnet sind, daß die Prüfzone 4, 5 etwa zentralmittig bezüglich der Flachseiten 56a angeordnet ist.

Zur Überwachung der momentan in der Klebstoffschicht 5 herrschenden Temperatur ist ein Temperatursensor 60, beispielsweise an einem freien Randbereich der Klebstoffschicht 5, insbesondere der Prüfzone 4, 5 angeordnet. Der Temperatursensor 60 ist beispielsweise als NiCrNi-Thermoelement ausgebildet und über eine elektrische Leitung 61 mit einem Steuergerät (nicht gezeigt) verbunden, welches nach Erreichen einer einstellbaren Soll-Prüftemperatur in der Prüfzone 4, 5 die Linearantriebseinheit 37 - wie nachfolgend beschrieben - betätigt, so daß die Temperiervorrichtung 20 in eine Ruhestellung (Figur 2) verfahren wird.

In der Temperierstellung der Temperiervorrichtung 20 gemäß Figur 1 ist der Probenkörper 1 bereits in die Einspanneinrichtungen der Werkstoffprüfvorrichtung eingesetzt. Hierbei ist die Temperiervorrichtung 20 derart beispielsweise mit der Grundplatte 21 an der Werkstoffprüfvorrichtung (nicht gezeigt) befestigt, daß die Temperiereinheiten 50, 51 nach Art einer Temperierzange am Probenkörper 1 im Bereich der Überlappungszone 4 bzw. dessen Prüfzone 4, 5 berührend anliegen. In einer Ruhestellung (Figur 2) der erfindungsgemäßen Temperiervorrichtung 20 ist die Schubstange 36 der Linearantriebseinheit 37 in einen ausgefahrenen Zustand verschoben, so daß die Temperiereinheiten 50, 51 über das aus den Betätigungshebeln 31, 32, den Scherenhebeln 29, 30 und gegebenenfalls den Hilfslenkern 38, 39 gebildeten Scherengitter ein Stück vertikal von den Flachseiten 2b, 3b des Probenkörpers 1 abgehoben sind, so daß der Probenkörper 1 lediglich mittels der Einspanneinrichtungen der Werkstoffprüfvorrichtung (nicht gezeigt) gehalten ist. In dieser Ruhestellung wird die Werkstoffprüfvorrichtung betätigt und der Prüfversuch am Probenkörper 1 durchgeführt.

Selbstverständlich liegt es auch im Bereich der Erfindung die Temperiereinheiten 50, 51 gegebenenfalls als elektrisch oder anderweitig beheiz- oder kühlbare Temperiereinheiten 50, 51 auszubilden.

Außerdem liegt es selbstverständlich ebenfalls im Bereich der Erfindung, die Betätigungseinrichtung für die Temperiereinheiten 50, 51, welche im beschriebenen Ausführungsbeispiel gemäß Figur 1 und Figur 2 aus der Linearantriebseinheit 37, der Schubstange 36 und dem Scherengitter 29, 30, 31, 32, 38, 39 besteht durch eine andere geeignete Betätigungsvorrichtung für die Temperiereinheiten 50, 51 zu ersetzen. Wesentlich hierbei ist, daß die während des Temperiervorganges berührend am Probenkörper 1 anliegenden Temperiereinheiten 50, 51 nach Erreichen der Soll-Prüftemperatur zumindest ein Stück von der Prüfzone 4, 5 des Probenkörpers 1 abhebbar sind, so daß dieser während der Versuchsdurchführung sicher nicht mit den Temperiereinheiten 50, 51 in Kontakt steht.

Die Temperiervorrichtung 20 gemäß Figur 1 und 2 eignet sich insbesondere für sogenannte Kurzzeitversuche, d. h. Versuche, bei denen die Versuchsdauer derart kurz ist, daß die nach dem Entfernen der Temperiervorrichtung 20 vom Probenkörper 1 sich zwangsläufig einstellende Temperaturveränderung in der Prüfzone 4, 5 nicht ins Gewicht fällt. Derartige geeignete Versuche sind beispielsweise hochdynamische Schlagzugversuche oder dergleichen, bei denen der Versuch zweckmäßigerweise unmittelbar nach dem Entfernen der Temperiereinheiten 50, 51 durchgeführt wird.

Weiterhin ist wesentlich, daß die Temperiereinheiten 50, 51, welche während des Temperiervorganges den Probenkörper 1 berühren, vor der Versuchsdurchführung vom Probenkörper 1 abgehoben werden, so daß während des Versuchsablaufes durch die Temperiervorrichtung 20 keinerlei Querkräfte in den Probenkörper 1 eingeleitet werden und Reibkräfte zwischen dem Probenkörper 1 und den Temperiereinheiten 50, 51 ausgeschlossen sind. Derartige Störkräfte würden die Versuchsergebnisse nachteilig beeinflussen.

Besonders vorteilhaft bei einer derartigen Temperiervorrichtung 20 ist, daß die Temperatur in der Prüfzone 4, 5 bis kurz vor der Versuchsdurchführung definiert einstellbar und überwachbar ist, so daß eine Überhitzung bzw. Unterkühlung des Probenkörpers 1 vor der Versuchsdurchführung überflüssig wird und somit auch unerwünschte chemische Reaktionen in der Klebschicht 5 beispielsweise aufgrund von Überhitzung vermieden werden.

Außerdem ist eine erfindungsgemäße Temperiervorrichtung 20 in einfacher Art und Weise in einen automatischen Versuchsablauf einbindbar, da beispielsweise über ein Steuersignal des Temperatursensors 60 nach Erreichen der Soll-Prüftemperatur über eine einfache Steuerung die Linearantriebseinheit 37 betätigbar ist, so daß die Temperiereinheiten 50, 51 vom Probenkörper 1 abgehoben werden. Unmittelbar nach dem Steuersignal für die Linearantriebseinheit 37 kann durch die Steuereinheit ein weiteres Steuersignal, insbesondere ein Startsignal, ausgegeben werden, welches die Versuchsdurchführung, d. h. die Inbetriebnahme der Werkstoffprüfvorrichtung auslöst.

Ein weiterer Vorteil der erfindungsgemäßen Temperiervorrichtung ist, daß die Probenkörper 1 seitens des Bedienpersonals in die Werkstoffprüfvorrichtung eingesetzt werden können, wenn diese Raumtemperatur aufweisen, so daß zur Handhabung der Probenkörper beim Einbau in die Werkstoffprüfvorrichtung keinerlei Schutzvorrichtungen, beispielsweise Handschuhe, für das Bedienpersonal notwendig sind. Außerdem entfallen aufwendige Vorversuche zur Ermittlung des Zeitpunktes des Einleitens des Prüfvorgangs. Die erfindungsgemäße Temperiervorrichtung eignet sich somit insbesondere für die Durchführung von sogenannten Parameterversuchen, bei denen eine Vielzahl von Proben geprüft werden muß, weil durch die erfindungsgemäße Temperiervorrichtung die Prüfzeit stark verkürzt werden kann und somit eine erhebliche Kosteneinsparung erreichbar ist.

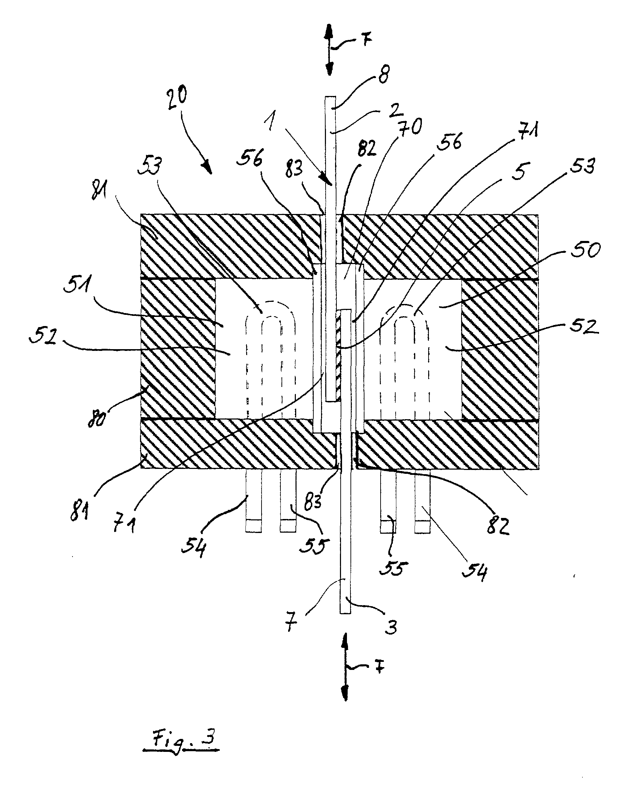

Bei einer zweiten Ausführungsform der erfindungsgemäßen Temperiervorrichtung 20 (Figur 3) sind die Temperiereinheiten 50, 51 ebenfalls mit den Wärmeübertragungsplatten 56 aufeinanderzuweisend beabstandet gegenüberliegend voneinander angeordnet, so daß ein Zwischenraum 70 gebildet ist. Der Abstand zwischen den Wärmeübertragungsplatten 56 ist etwas größer als die maximale Dicke des Probenkörpers 1 im Bereich Prüfzone 4, 5, so daß zwischen den Probenkörperplatten 1 bzw. 2 und den Wärmeübertragungsplatten 56 jeweils ein Spalt 71 gebildet ist. Bei der Ausführungsform gemäß der Figur 3, sind die Temperiereinheiten 50, 51 zueinander unbeweglich angeordnet, so daß der Zwischenraum 70 eine feste lichte Weite hat. Der Probenkörper 1 ist dabei derart im Zwischenraum 70 angeordnet, daß die Überlappungszone 4 etwa zentralmittig bezüglich der Wärmeübertragungsplatten 56 zu liegen kommt und - wie oben bereits erwähnt - die Probenkörperplatten 1, 2, die Temperiereinheiten 50, 51 bzw. die Wärmeübertragungsplatten 56 nicht berühren, so daß der Probenkörper 1 im Zwischenraum 70 frei beweglich angeordnet ist. Der Probenkörper 1 ist an seinen freien Ende 6, 7 in die Einspannvorrichtungen (nicht gezeigt) der Werkstoffprüfvorrichtung (nicht gezeigt) eingespannt.

Die Temperiereinheiten 50, 51 sind im wesentlichen gleich aufgebaut wie die Temperiereinheiten 50, 51 bei der Ausführungsform gemäß Figur 1 und Figur 2.

Gegebenenfalls sind die Temperiereinheiten 50, 51 in eine Ummantelung 80 aus einem schlecht wärmeleitenden Werkstoff, z. B. einem Kunststoffschaumwerkstoff, z. B. einem Styrodur®-Werkstoff, eingebettet, welche die Temperiereinheiten 50, 51 umfänglich umgibt. In Längsrichtung 9 bezüglich des Probenkörpers 1 sind jeweils die Temperiereinheiten 50, 51 in dieser Richtung bedeckend Plattenelemente 81 angeordnet, welche ebenfalls aus einem Dämmstoff bestehen, so daß die Umhüllung 80 und die Plattenelemente 81 eine allseitige Isolierummantelung der Temperiereinheiten 50, 51 und somit auch des Zwischenraums 70 zwischen den Wärmeübertragungsplatten 56 gewährleisten. Die Plattenelemente 81 sind zweckmäßigerweise mit der Umhüllung 80 lösbar verbunden. Die Plattenelemente 81 weisen jeweils eine vorzugsweise schlitzförmige Ausnehmung 82 auf, welche die Probenkörperplatten 1 bzw. 2 mit Spiel durchgreifen, so daß jeweils Spielspalte 83 gebildet sind. Wesentlich ist, daß der Probenkörper 1 ohne direkte Berührung mit der Temperiervorrichtung 20 von dieser lediglich im Bereich der Überlappungszone 4 umgeben ist.

Gegebenenfalls ist es zweckmäßig, die Spielspalte 83 und den verbleibenden Zwischenraum 70 mit einer Wärmeleitsubstanz zu füllen, wobei die Wärmeleitsubstanz hinsichtlich ihrer viskosen Eigenschaften bevorzugt ein newtonsches Fluid ist, damit z. B. bei niedrigen Versuchsgeschwindigkeiten der Viskositätseinfluß des Wärmeleitsubstanz keine negativen Einflüsse auf die Versuchsergebnisse hat.

Die Temperiervorrichtung 20 gemäß Figur 3 ist mittels geeigneter Halter (nicht gezeigt) beispielsweise an der Werkstoffprüfvorrichtung befestigt. Im Bedarfsfall ist die Temperiervorrichtung 20 gemäß Figur 3 analog zur Temperiervorrichtung 20 gemäß dem ersten Ausführungsbeispiel (Figur 1, 2) mit einem Temperatursensor 60 ausgestattet, welcher die Isttemperatur beispielsweise im Zwischenraum 70 oder wie bei der Ausführungsform gemäß Figur 1, 2 direkt am Probenkörper 1, vorzugsweise im Bereich der Prüfzone 4, 5, erfaßt.

Wie bei der Temperaturvorrichtung 20 gemäß Figur 1, 2 sind die Temperiereinheiten ebenfalls über die Zulaufstutzen 54 und die Rücklaufstutzen 55 mit einer Versorgungseinheit verbunden, welche das Temperiermedium mit vorbestimmbarer Temperatur und gegebenenfalls mit vorbestimmbarer Durchflußmenge durch die Kanäle 53 der Temperiereinheiten 52 pumpt. Selbstverständlich können die Temperiereinheiten 50, 51 auch als elektrisch beheizbare Temperiereinheiten 50, 51 bzw. elektrisch kühlbare Temperiereinheiten 50, 51, beispielsweise als Peltier-Elemente ausgeführt sein.

Die Temperiervorrichtung 20 gemäß Figur 3 eignet sich insbesondere zur Durchführung von Langzeitwerkstoffprüfungen, z. B. zur Ermittlung der Zeitstandfestigkeit oder der Dauerfestigkeit eines Probenkörpers 1. Bei derartigen Versuchen ist es wesentlich, daß die Prüfzone 4, 5 (Überlappungszone 4 bzw. Klebstoffschicht 5) während der gesamten Versuchsdauer auf einem definierten Temperaturniveau gehalten wird. Hierzu ist die Temperiervorrichtung 20 gemäß Figur 3 besonders geeignet, weil keine mechanische Berührung zwischen der Temperiervorrichtung 20 und dem Probenkörper 1 während der Versuchsdauer stattfindet und somit störende Reibkräfte oder Querkräfte, die während des Versuches auf den Probenkörper 1 einwirken könnten, vermieden sind.

Im folgenden wird das erfindungsgemäße Verfahren zur Werkstoffprüfung unter Verwendung einer Temperiervorrichtung 20 beschrieben:

Zunächst sind in bekannter Art und Weise die Probenkörper 1 und eine geeignete Werkstoffprüfvorrichtung für die Versuchsdurchführung vorzubereiten und die Probenkörper 1 in die Werkstoffprüfvorrichtung einzuspannen. Danach sind die Prüfzonen (Überlappungszone 4 bzw. Klebstoffschicht 5) mittels einer Temperiervorrichtung 20 gezielt auf eine definierte Soll-Prüftemperatur zu temperieren. Im Falle eines zu absolvierenden Kurzzeitversuches (beispielsweise eines quasistatischen Zug- bzw. Druckscherversuches oder eines hochdynamischen Schlagdruck- bzw. Schlagzugversuches) ist es zur Gewährleistung einer möglichst schnellen Temperierung der Prüfzone besonders zweckmäßig, eine Temperiervorrichtung 20 zu verwenden, welche mittels berührend am Probenkörper 1 anliegenden Temperiereinheiten 50, 51 nach Art einer Temperierzange eine direkte und schnelle Temperierung auf eine vorbestimmte Soll-Prüftemperatur ermöglicht. Im Falle eine Temperierung mittels Berührung der Temperiereinheiten 50, 51 müssen diese nach Erreichen der Soll-Prüftemperatur der zu prüfenden Klebschicht 5 unmittelbar vor der Versuchsdurchführung vom Probenkörper 1 abgehoben werden. Unmittelbar nach dem Abheben der Temperiereinheiten 50, 51 ist der Versuchsablauf einzuleiten.

Im Falle von Langzeitwerkstoffprüfungen ist nach dem Einspannen des Probenkörpers 1 in die Werkstoffprüfvorrichtung vorzugsweise eine Temperiervorrichtung 20 nach Art einer lediglich die Prüfzone 4, 5 umgebenden Miniaturklimakammer gemäß

Figur 3, welche Temperiereinheiten 50, 51 aufweist, die den Probenkörper 1 nicht berühren, anzuordnen. Mittels eines Temperatursensors 60 ist die Isttemperatur im Zwischenraum 70 zu überwachen. Nach Erreichen einer vordefinierten Soll-Prüftemperatur ist die Versuchsdurchführung einzuleiten. Hierbei wird durch eine Werkstoffprüfvorrichtung über geeignete Einspannvorrichtungen an den freien Enden 6, 7, des Prüfkörpers 1 eine definierte Kraft F eingeleitet, welche je nach durchzuführendem Versuch eine Zug-, eine Druckkraft oder eine Schlagzug- oder Schlagdruckkraft oder eine anderweitige geeignete Kraft sein kann, die beispielsweise eine Zug- bzw. Druckschwellbeanspruchung oder eine Zug- bzw. Druckwechselbeanspruchung in der Prüfzone 4, 5 bewirkt. Zweckmäßigerweise ist die Isttemperatur im Zwischenraum 70 und somit auch in der Prüfzone 4, 5 des Probenkörpers 1 über die Temperierfluidversorgungseinrichtung (nicht gezeigt) auf einen konstanten Wert regelbar oder im Bedarfsfalle während der Versuchsdurchführung an vorbestimmbare Temperaturverläufe anpaßbar. Eine Anpassung bzw. Regelung des Temperaturverlaufes gelingt mit einer erfindungsgemäßen Temperiervorrichtung in besonders effektiver und genauer Art und Weise, weil nur geringe Stoffmassen zu erwärmen bzw. abzukühlen sind. Insofern ist eine erfindungsgemäße Temperiervorrichtung besonders geeignet auch Temperaturverläufe mit hohen Temperaturgradienten ohne wesentliche zeitliche Verzögerung auf die Prüfzone 4, 5 zu übertragen. Insbesondere eignet sich die Temperiervorrichtung auch außerhalb von mechanischen Materialprüfungen z. B. zur Simulation thermischer Alterung von polymeren Werkstoffen, insbesondere von Klebstoffen.

Weiterhin ist es zweckmäßig, zur Minimierung der Wärmeverluste an den freien Enden 6, 7 der Probenkörper 1, welche sich außerhalb der Temperiervorrichtung 20 befinden, diese derart in die Werkstoffprüfvorrichtung einzuspannen, daß ein möglichst geringer Wärmeübergang zwischen den Probenkörperplatten 1, 2 und der Einspannvorrichtung erfolgen kann. Dies gelingt beispielsweise durch einen Querbolzen (nicht gezeigt), welcher jeweils durch ein Loch 8 des Probenkörpers gesteckt ist und an dessen freien Enden eine entsprechende Einspannvorrichtung angreift. Vorteilhaft hierbei ist, daß zur Wärmeübertragung zwischen den Probenkörperplatten 1, 2 und dem Querbolzen nur eine geringe Übertragungsfläche zur Verfügung steht, so daß der Wärmeübergang und somit Energieverluste minimiert sind.

## Patentansprüche

1. Temperiervorrichtung, insbesondere für eine Werkstoffprüfvorrichtung, zur Temperierung eines Probenkörpers (1) aufweisend zumindest eine auf eine vorbestimmbare Temperatur regelbare Temperiereinheit (50, 51), welche im Bereich einer Prüfzone (4, 5) des Probenkörpers (1) diese berührend oder unmittelbar benachbart zur Prüfzone (4, 5) auf die Prüfzone (4, 5) einwirkend angeordnet ist.

2. Temperiervorrichtung nach Anspruch 1,
**dadurch gekennzeichnet, daß**
die Temperiereinheit (50, 51) mittels einer Betätigungseinrichtung (37, 36, 28, 29, 31, 32, 38, 39) bezüglich der Prüfzone (4, 5) bewegbar angeordnet ist.

3. Temperiervorrichtung nach Anspruch 1 und/oder 2,
**dadurch gekennzeichnet, daß**
die Temperiervorrichtung (20) nach Art einer Temperierzange mit zwei Temperiereinheiten (50, 51) ausgebildet ist und mittels der Betätigungseinrichtung (37, 36, 29, 30, 31, 32, 38, 39) in eine Temperierstellung verfahrbar ist, in der die Temperiereinheiten (50, 51) am Probenkörper (1) im Bereich der Prüfzone (4, 5) berührend anliegen und in eine Versuchsstellung verfahrbar ist, in der die Temperiereinheiten (50, 51) vom Probenkörper (1) abgehoben angeordnet sind.

4. Temperiervorrichtung nach einem der vorangegangenen Ansprüche,
**dadurch gekennzeichnet, daß**
die Betätigungseinrichtung (37, 36, 29, 30, 31, 32, 38, 39) eine Linearantriebseinheit (37) und ein Scherengitter (29, 30, 31, 32,38, 39) aufweist.

5. Temperiervorrichtung nach einem der vorangegangenen Ansprüche,
**dadurch gekennzeichnet, daß**
die Temperiervorrichtung (20) einen Temperatursensor (60) zur Überwachung der Isttemperatur in der Prüfzone (4, 5) des Probenkörpers (1) aufweist, wobei der Temperatursensor (60) als NiCrNi-Thermoelement ausgebildet ist.

6. Temperiervorrichtung nach einem der vorangegangenen Ansprüche,
**dadurch gekennzeichnet, daß**
die Temperiereinheiten (50, 51) beabstandet gegenüberliegend angeordnet sind, so daß ein Zwischenraum (70) gebildet ist, in dem die Prüfzone (4,5) des Probenkörpers1 angeordnet ist und die Temperiereinheiten (50, 51) einen festen Abstand zueinander aufweisen, derart, daß die lichte Weite des Zwischenraums (70) etwas größer ist als die maximale Dicke des Prüfkörpers (1) im Bereich der Prüfzone (4, 5).

7. Temperiervorrichtung nach einem der vorangegangenen Ansprüche,
**dadurch gekennzeichnet, daß**
die Betätigungseinrichtung (36, 37, 29, 30, 31, 32, 38, 39) als Klapp-, Schwenk-, oder dergleichen -Mechanismus ausgebildet ist.

8. Temperiervorrichtung nach einem der vorangegangenen Ansprüche,
**dadurch gekennzeichnet, daß**
die Temperiereinheit (50, 51) einen Temperierblock (52) aufweist, wobei der Temperierblock (52) in dessen Innerem einen fluiddurchströmbaren Kanal (3) aufweist, welcher mit einem außenseitig am Temperierblock (52) angeordneten Zulaufstutzen und einem Rücklaufstutzen (55) in Verbindung steht und der Temperierblock (52) über die Stutzen (54, 55) mit einer Temperierfluidversorgungseinrichtung verbunden ist, welche ein Temperierfluid mit vorbestimmbarer Temperatur und/oder vorbestimmbarer Durchflußmenge zur Verfügung stellt.

9. Temperiervorrichtung nach einem der vorangegangenen Ansprüche,
**dadurch gekennzeichnet, daß**
der Temperierblock (52) jeweils eine dem Probenkörper (1) zugewandte Flachseite (52a) aufweist, an der flächig, insbesondere vollflächig anliegend eine Wärmeübertragungsplatte (56) angeordnet ist, welche vorzugsweise aus einem gut wärmeleitenden Material besteht, wobei in der Temperierstellung die Wärmeübertragungsplatte (56) im Bereich der Prüfzone (4, 5) des Probenkörpers (1) am Probenkörper berührend anliegt, wobei die Wärmeübertragungsplatten (56) flächenmäßig derart bemessen sind, daß deren freie Flachseite (56a), welche zum Probenkörper hin gewandt ist, etwa das 1,5- bis 15-fache, bevorzugt, das 4- bis 8-fache der Fläche der flächenmäßigen Erstreckung der Prüfzone (4) aufweist.

10. Temperiervorrichtung nach einem der vorangegangenen Ansprüche,
**dadurch gekennzeichnet, daß**
die Temperiereinheit (50, 51) derart bezüglich des Probenkörpers (1) angeordnet ist, daß die Prüfzone (4, 5) etwa zentralmittig bezüglich der Flachseiten (56a) angeordnet ist und die Temperiereinheit (50, 51) als elektrisch beheiz- oder kühlbare Temperiereinheit (50, 51) ausgebildet ist, z.B. als elektrische Heizplatten oder als Peltier-Elemente und der Probenkörper (1) mit Spiel im Zwischenraum (70) angeordnet ist, so daß zwischen den Wärmeübertragungsplatten (56) und dem Probenkörper(1) ein Spalt (71) gebildet ist.

11. Temperiervorrichtung nach einem der vorangegangenen Ansprüche,
**dadurch gekennzeichnet, daß**
die Temperiereinheit (50, 51) in eine Isolierummantelung (80, 81) aus einem schlecht wärmeleitenden Werkstoff, z.B. einem Kunststoffschaumwerkstoff eingebettet ist, welche die Temperiereinheiten (50, 51) allseitig umfänglich umgibt, wobei die Isolierummantelung (80, 81) schlitzförmige Ausnehmungen (82) aufweist, welche die Probenkörperplatten (1, 2) mit Spiel durchgreifen, so daß jeweils Spielspalte (83) gebildet sind und der Zwischenraum (70) und/oder die Spielspalte (83) mit einer Wärmeleitsubstanz verfüllt sind, wobei die Wärmeleitsubstanz bevorzugt ein newtonsches Fluid ist.

12. Temperiervorrichtung nach einem der vorangegangenen Ansprüche,
**dadurch gekennzeichnet, daß**
der Zwischenraum (70) als Kammer, insbesondere als Miniaturtemperier- und/oder Miniaturklimakammer ausgebildet ist.

13. Verwendung einer Temperiervorrichtung nach einem oder mehreren der vorangegangenen Ansprüche zur thermischen Alterung eines Probenwerkstoffes (5) im Bereich der Prüfzone (4, 5), wobei der Probenwerkstoff (5) einem vorzugsweise vordefinierten Temperaturverlauf ausgesetzt wird.

14. Werkstoffprüfverfahren zur Ermittlung von temperaturabhängigen Werkstoffeigenschaften eines Probenkörpers (1), welcher eine Prüfzone (4, 5) aufweist, wobei lediglich die Prüfzone (4, 5) bis unmittelbar vor der Versuchsdurchführung oder während der Versuchsdurchführung definiert auf eine vorbestimmbare Soll-Prüftemperatur temperiert wird.

15. Werkstoffprüfverfahren nach Anspruch 14,
**dadurch gekennzeichnet, daß**
eine Temperiervorrichtung (20) nach einem oder mehreren der Ansprüche 1 bis 25 verwendet wird.

16. Werkstoffprüfverfahren nach Anspruch 14 und/oder 15,
**dadurch gekennzeichnet, daß**
mittels eines Temperatursensors (60) die Isttemperatur in der Prüfzone (4, 5) des Probenkörpers (1) ermittelt wird und nach Erreichen der Isttemperatur die Temperiervorrichtung (20) in eine Ruhestellung verfahren wird.

17. Werkstoffprüfverfahren nach einem oder mehreren der Ansprüche 14 bis 16,
**dadurch gekennzeichnet, daß**
unmittelbar nach Erreichen der Ruhestellung der Temperiervorrichtung (20) die Versuchsdurchführung begonnen wird.

18. Werkstoffprüfverfahren nach einem oder mehreren der Ansprüche 14 bis 17,
**dadurch gekennzeichnet, daß**
bei einer Temperierung während der Versuchsdurchführung die Prüfzone (4, 5) des Probenkörpers (1) berührungslos temperiert wird.

19. Werkstoffprüfverfahren nach einem oder mehreren der Ansprüche 14 bis 18,
**dadurch gekennzeichnet, daß**
die Isttemperatur im Bereich der Prüfzone (4, 5) während der Versuchsdurchführung überwacht wird.

20. Werkstoffprüfverfahren nach einem oder mehreren der Ansprüche 14 bis 19,
**dadurch gekennzeichnet, daß**
die Prüfzone (4, 5) zur thermischen Alterung vor und / oder während der Versuchsdurchführung einem vorbestimmten zeitlich veränderlichen Temperaturverlauf ausgesetzt wird.
